# EUROPEAN PATENT APPLICATION

(11) **EP 1 266 729 A2**
(43) Date of publication of application: **18.12.2002**
(21) Application number: 02425302.3
(22) Date of filing: 15.05.2002
(51) Int. Cl.: B27C 5/06

(54) **A machine for machining wooden or similar workpieces**

(30) Priority: 18.05.2001 IT BO20010314
(71) Applicant: SCM GROUP S.p.A., 47900 Rimini (IT)
(72) Inventor: Pucci, Aureliano, 47900 Rimini (IT)
(74) Representative: Lanzoni, Luciano

(57) **Abstract**

A machine (1) for machining wooden or similar workpieces comprises a horizontal table (2) on which the workpiece rests, the table supported by a base (3); a vertical machining axis (4), at the side of the table (2) and with at least one tool for machining the workpiece. Close to the support table (2) there is a first horizontal arm (5) supporting a machine (1) control unit (6) connected to a column (7), which is attached to the base (3) and turns about its axis, and a second horizontal arm (8) supporting a workpiece feeder (9). The second arm can be positioned on the horizontal table (2) close to the machining axis (4). The first (5) and second (8) horizontal arms are both attached to the column (7) and can be adjusted by turning and positioned independently and relative to one another using adjusting means (10) which act upon at least the second horizontal arm (8).

## Description

The present invention relates to a machine for machining wooden or similar workpieces.

The machine which is the subject of this description is called a lower vertical router or, as it is known to experts in the sector, "spindle moulder" and is used for various types of machining operations on wooden workpieces (for example, moulding or cutting tenons on crosspieces or uprights which will be used to make door or window frames), with average productivity.

This machine basically comprises a horizontal work table on which the wooden workpiece rests and a vertical machining axis, at the side of the horizontal table, all supported by a base.

The machining axis comprises a motor-powered shaft, which supports and drives one or more tools designed to allow workpiece machining.

At present, most models of these machines are fitted with an accessory consisting of a suspended machine control unit, that is to say, supported by a first horizontal arm attached to a first vertical shaft at the back of the machine. This accessory significantly helps the operator, who can control and check how machine operating steps are progressing from any point.

Another accessory which can be fitted on the machine (which, in the basic configuration has no elements to increase machine productivity) is a motor-powered feeder for the workpieces, for example during the tenon cutting step, normally supported by a structure comprising a second shaft with vertical axis close to the back of the machine, to which a second horizontal feeder support arm is attached. The operator can turn the shaft about its vertical axis to allow feeder positioning from a non-operating position, outside the work table, to an operating position, in which the feeder is on the work table in an active position on the workpiece.

The second horizontal arm which supports the feeder can be fitted with manual means designed to allow the feeder to be adjusted in height by sliding it along the shaft, for easier positioning in both the operating and non-operating positions.

However, the combined application of the suspended control unit and the feeder significantly increases machine overall dimensions and can create situations in which workpiece feeder manoeuvres and positioning are difficult and slow, due to the presence of the suspended control unit and to the fact that the arms cross each other's paths.

The aim of the present invention is, therefore, to overcome the above-mentioned disadvantage by providing a machine for machining wooden or similar workpieces which is equipped with a suspended control unit and feeder unit with an extremely compact architecture, with reduced overall dimensions and rapid manoeuvring and positioning.

Accordingly, the present invention provides a machine for machining wooden or similar workpieces comprising a horizontal table on which the workpiece rests, supported by a base; with a vertical machining axis at the side of the table and fitted with at least one tool for machining the workpiece. Close to the table there is a first horizontal arm supporting a machine control unit attached to a column, connected to the base, and able to turn about its axis, and a second horizontal arm, supporting a workpiece feeder unit. The second arm can be positioned on the horizontal table close to the machining axis. The first and second horizontal arms are both attached to the column and can be adjusted by turning and positioned independently and relative to one another using adjusting means which act upon at least the second horizontal arm.

The technical features of the present invention, in accordance with the above-mentioned aims, are set out in the claims herein and the advantages more clearly illustrated in the detailed description which follows, with reference to the accompanying drawings, which illustrate a preferred embodiment of the invention without limiting the scope of the inventive concept, and in which
- Figure 1 is a perspective view with some parts cut away to better illustrate others, of a machine for machining wooden or similar workpieces;
- Figure 2 is a front view with some parts in cross-section and other parts cut away to better illustrate other details, of a detail A of the machine illustrated in Figure 1;
- Figure 3 is a side view with some parts cut away to better illustrate others, of the detail A;
- Figure 4 is a perspective view of a detail B illustrated in Figure 1;
- Figure 4a is a schematic front view with some parts cut away, of an alternative embodiment of the detail B illustrated in Figure 4;
- Figure 5 is a top plan view with some parts cut away and other parts in cross-section, of a further detail of the machine illustrated in the previous figures, showing a support and actuating unit.

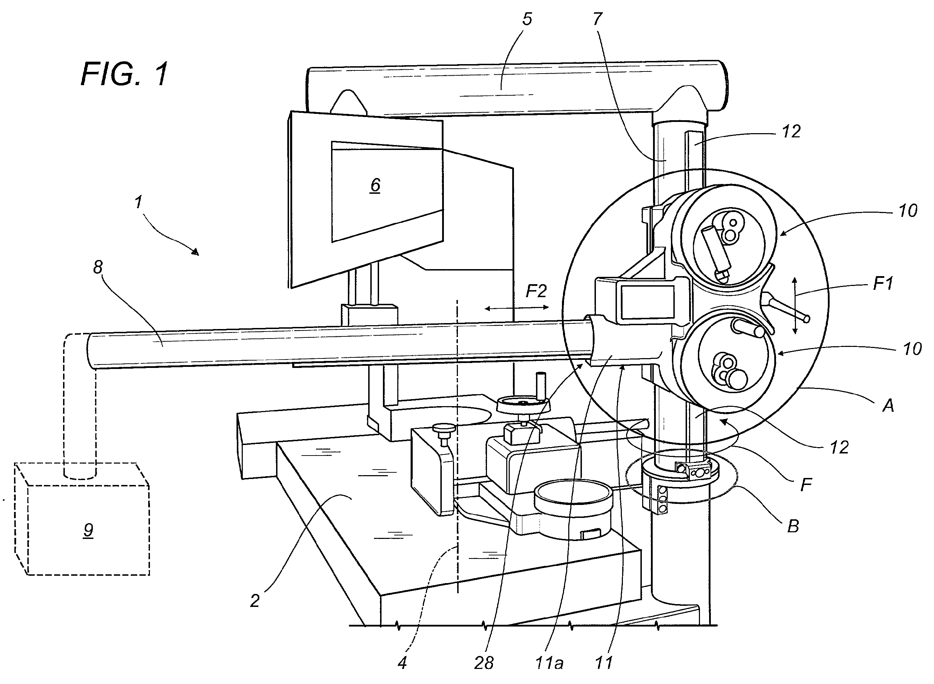

With reference to the accompanying drawings, and in particular with reference to Figure 1, the machine disclosed is used for machining wooden or similar workpieces and is known to experts in the sector as a "spindle moulder".

This machine, labelled 1 as a whole, basically comprises a horizontal table 2 on which the workpiece (not illustrated) rests. The table 2 is supported by a base (also not illustrated). At the side of the table 2 there is a vertical machining axis 4 on which there is a tool for machining the workpiece (not illustrated here, as it is not part of the present invention).

Close to the support table 2 there is a first horizontal arm 5, supporting a machine 1 control unit 6, of the suspended type, the arm being attached to a column 7, connected to the base below it, and turning about its axis. There is also a second horizontal arm 8, supporting a workpiece feeder unit 9 (illustrated with a dashed line in Figure 1), which can be positioned on the horizontal table 2 close to the machining axis 4.

These two additional elements on the machine 1, that is to say, the suspended control unit 6 and the feeder unit 9, are supported by the first and second horizontal arms 5 and 8, which are both attached to the column 7, adjustable by turning and positioned independently and relative to one another using adjusting means 10 which act upon at least the second horizontal arm 8.

As illustrated in Figures 1, 2 and 3, the second horizontal arm 8 is supported by a coupling 11 which connects it to the column 7 and is fitted with the adjusting means 10, divided into first and second adjusting means 10a and 10b. The first adjusting means 10a allow the second arm 8 to rotate about the column 7 (see arrow F in Figure 1) and positioning of the second arm 8 at the correct height (see arrow F1 in Figure 1). The second adjusting means 10b allow the second arm 8 to move in both directions along its horizontal axis (see arrow F2 in Figure 1). All of these movements by the second arm 8 are independent of the movements of the column 7 and the first arm 5.

The coupling 11 comprises a first portion 11a attached to the second horizontal arm 8, with a first, horizontal, round through seat 28, and a second portion 11b attached to the column 7, with a second, vertical through seat 16, slidably attached to the column 7.

More precisely, the above-mentioned first adjusting means 10a comprise a kinematic chain basically consisting of:
- the connecting and support coupling 11;
- a second adjusting column 12, extending vertically and parallel with the column 7, rotating with the support coupling 11;
- means 13 for adjusting the coupling 11 relative to the column 7, located on the coupling 11 and acting upon the second column 12, designed to allow the coupling 11 to move in both directions along the column 7;
- means 14 for supporting the lower end of the second column 12 on
- a ring-shaped support base 15 surrounding the column 7, allowing the support means 14 to slide and allowing the second column 12 and the column 7 to move relative to one another.

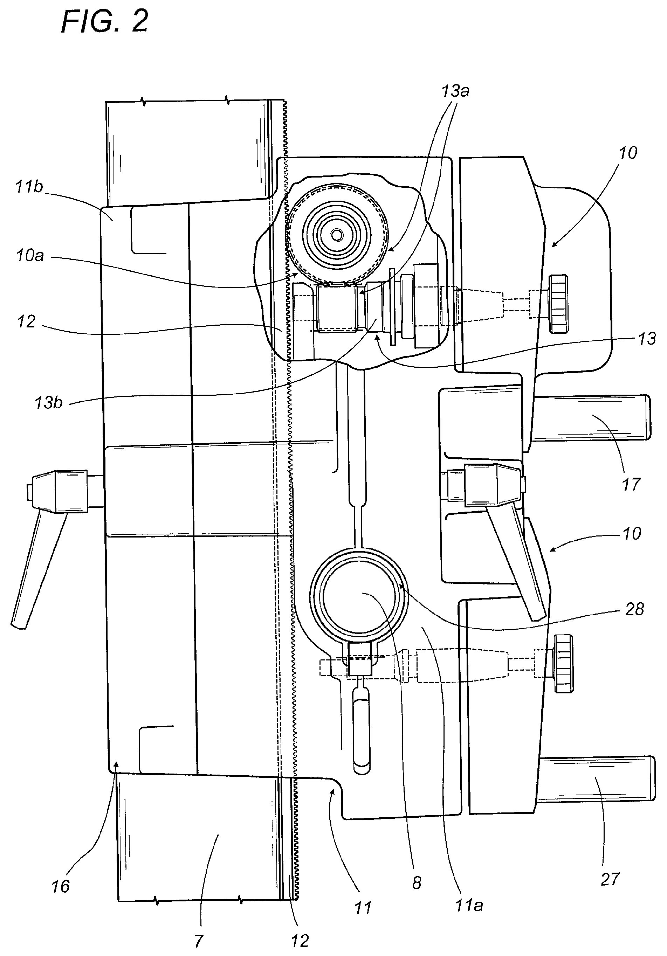

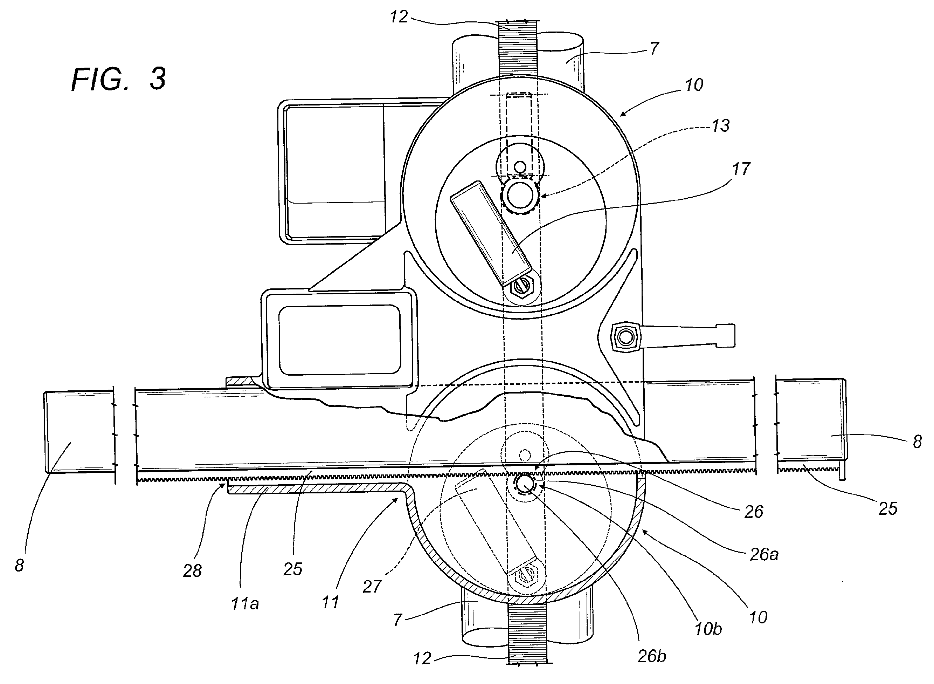

As illustrated in Figures 2 and 3, the second column consists of a first rack 12 which engages with the second through seat 16 in the support coupling 11.

The first rack 12 is subjected to the action of the adjusting means 13, which comprise an irreversible kinematic chain connected to a first movement control handle 17 located on the outside of the support coupling 11. The handle can be operated, for example, manually by the operator.

Again as illustrated in Figure 2, the kinematic chain may be, by way of example only, a worm wheel - worm screw unit 13a, engaging with the first rack 12. The unit is supported by a shaft 13b rotatably attached to the handle 17.

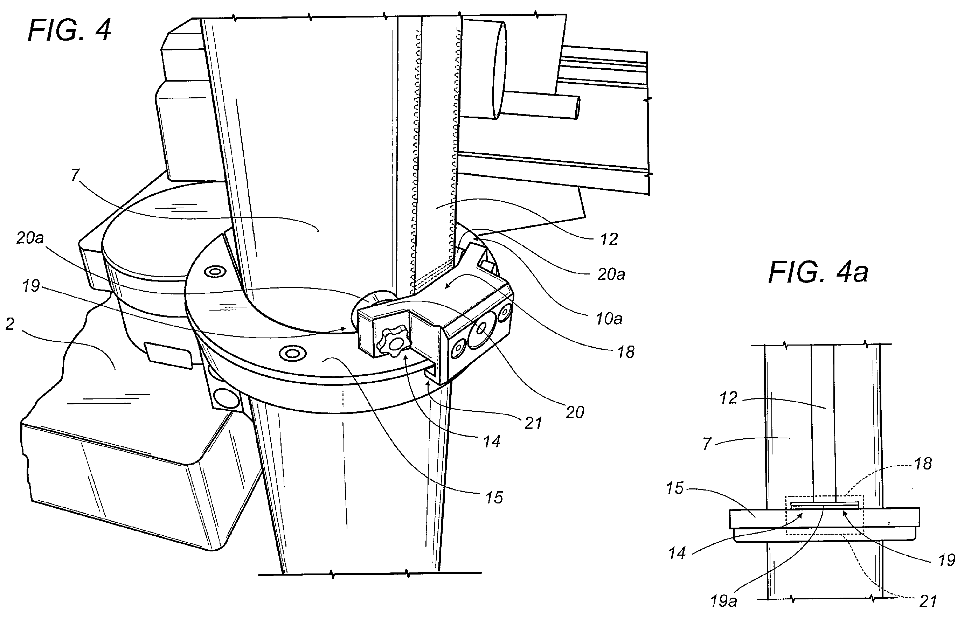

Looking in more detail at the kinematic chain forming the first adjusting means 10a, the above-mentioned support means 14 comprise (see Figures 4 and 4a) a support table 18, to which the second column 12 is connected, and sliding or rolling friction means 19, designed to make contact with the support base 15.

If the means 19 are sliding friction means, the embodiment may have a shoe 19a attached to the support table 18 and designed to slide on the support base 15 (see Figure 4a), all attached to a guide element 21 which partially encompasses the support base 15.

Alternatively, as illustrated in Figure 4, the support means 14 may comprise a carriage 20 consisting of the support table 18 and at least one pair of wheels 20a plus the guide element 21 which partially encompasses the support base 15.

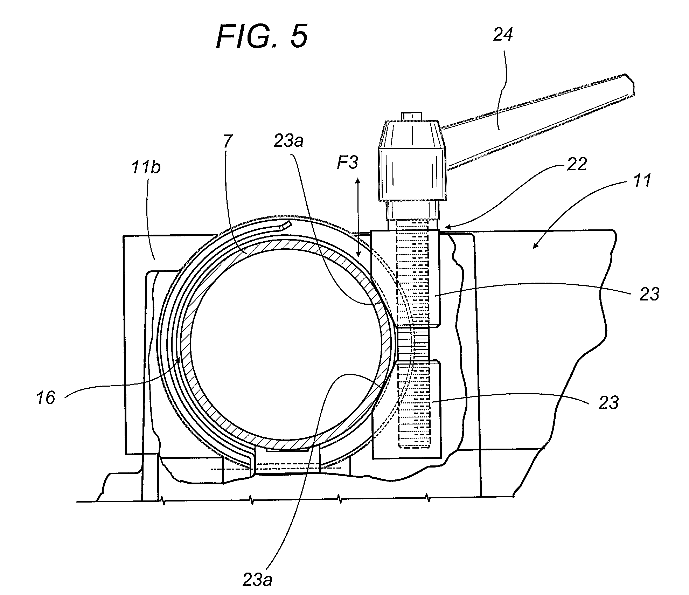

As illustrated in Figure 5, the coupling 11 comprises locking means 22 located on the coupling 11 itself and acting between the coupling 11 and the column 7, in such a way as to stabilise at least the coupling 11 height.

More specifically, the locking means 22 comprise a pad element 23 inside the coupling 11 and opposite the column 7. This pad element 23 is controlled by a grip 24 outside the coupling 11 and designed to allow the pad element 23 to move between a non-operating position, in which the pad element 23 has a portion 23a (divided into two substantially equal parts) shaped to copy part of the column 7 distanced from the column 7, and an operating locking position, in which the shaped portion 23a makes contact with the column 7 (see arrow F3 in Figure 5), allowing the coupling 11 height to be locked and, preferably locking the angle of the coupling 11 and, as a result, of the second arm 8.

As illustrated in Figure 3, the above-mentioned second adjusting means 10b comprise a second rack 25 attached to the outer surface of the second arm 8, and controlled by a second irreversible kinematic chain 26 connected to a second handle 27 outside the coupling 11 and designed, preferably when operated manually, to allow an adjusting movement by the second horizontal arm 8 along its axis, moving the feeder unit 9 towards and away from the column 7.

In this case, the second kinematic chain 26 may consist of a gear with teeth on the front 26a, directly engaged with the second rack 25 and supported by a shaft 26b directly connected to the second handle 27.

Figure 1 clearly illustrates how the top end of the column 7 is integral with the first horizontal arm 5 supporting the control unit 6 in such a way that it can be moved when the control unit 6 is pushed manually directly by the machine operator.

A machine structured in this way, therefore, fulfils the preset aims thanks to an extremely simple accessory control unit and workpiece feed unit configuration, which is rapidly and easily used by the operator. With just a few movements the operator can position or remove the feeder unit from the work table, without the unit interfering with the position of the control unit which the operator uses constantly.

The invention described can be subject to modifications and variations without thereby departing from the scope of the inventive concept. Moreover, all the details of the invention may be substituted by technically equivalent elements.

## Claims

1. A machine (1) for machining wooden or similar workpieces, the machine (1) being of the type comprising a horizontal table (2) on which the workpiece rests and supported by a base, a vertical machining axis (4) at the side of the table (2) and with at least one tool for machining the workpiece; close to the table (2) there being a first horizontal arm (5) supporting a machine (1) control unit (6), the arm being attached to a column (7), attached to the base and turning about its axis, and a second horizontal arm (8), supporting a workpiece feeder unit (9), it being possible to position the second arm on the horizontal table (2) close to the machining axis (4), the machine being **characterised in that** the first (5) and second (8) horizontal arms are both attached to the column (7) and adjusted by turning and positioned independently and relative to one another using adjusting means (10) which act upon at least the second horizontal arm (8).

2. The machine according to claim 1, **characterised in that** the second horizontal arm (8) is supported by a coupling (11) which connects it to the column (7) and is fitted with the adjusting means (10), the latter being divided into first adjusting means (10a) designed to allow the second arm (8) to rotate about the vertical shaft (7) and positioning of the second arm (8) at the correct height, and second adjusting means (10b) designed to allow the second arm (8) to move in both directions along its axis, independent of the movement of the column (7) and the first arm (5).

3. The machine according to claim 2, **characterised in that** the first adjusting means (10a) comprise:
- the connecting and support coupling (11);
- a second adjusting column (12), extending vertically and parallel with the column (7), rotating with the support coupling (11) ;
- means (13) for adjusting the coupling (11) relative to the column (7), located on the coupling (11) and acting upon the second column (12), being designed to allow movement of the coupling (11) in both directions along the column (7);
- means (14) which support the lower end of the second column (12) on
- a ring-shaped support base (15) surrounding the column (7), allowing the support means (14) to slide and allowing relative movement between the second column (12) and the column (7).

4. The machine according claim 3, **characterised in that** the second column consists of a first rack (12) engaging in a through seat (16) in the support coupling (11).

5. The machine according claim 3, **characterised in that** the second column consists of a first rack (12) and the adjusting means (13) comprise an irreversible kinematic chain acting upon the first rack (12) and connected to a first actuating handle (17) outside the support coupling (11).

6. The machine according to claim 3, **characterised in that** the support means (14) comprise a support table (18), to which the second column (12) is attached, as are sliding friction means (19) which make contact with the support base (15).

7. The machine according to claim 3, **characterised in that** the support means (14) comprise a support table (18), to which the second column (12) is attached, as are rolling friction means (20) which make contact with the support base (15).

8. The machine according to claim 3, **characterised in that** the support means (14) comprise a carriage (20) consisting of a support table (18) with at least one pair of wheels (20a) and a guide element (21) partially encompassing the support base (15).

9. The machine according to claim 3, **characterised in that** it comprises locking means (22) located on the coupling (11) and acting between the coupling (11) and the column (7) to stabilise at least the coupling (11) height.

10. The machine according to claim 9, **characterised in that** the locking means (22) comprise a pad element (23) inside the coupling (11) and opposite the column (7); the pad element (23) being supported by a grip (24) outside the coupling (11) and designed to allow the pad element (23) to move between a non-operating position, in which the pad element (23) has a portion (23a) shaped to copy part of the column (7) distanced from the column (7), and an operating locking position, in which the shaped portion (23a) makes contact with the column (7).

11. The machine according to claim 2, **characterised in that** the second adjusting means (10b) comprise a second rack (25) attached to the outer surface of the second arm (8), being controlled by a second irreversible kinematic chain (26) connected to a second handle (27) on the outside of the coupling (11) and designed, when operated manually, to allow an adjusting movement by the second horizontal arm (8) along its axis, moving the feeder unit (9) towards and respectively away from the column (7).

12. The machine according to claim 1, **characterised in that** the coupling (11) comprises a first portion (11a) connected to the second horizontal arm (8) and having a first, round, horizontal through seat (28), and a second portion (11b) connected to the column (7), having a second, vertical through seat (16), slidably attached to the column (7); the first and second portions (11a, 11b) housing the adjusting means (10).

13. The machine according to claim 1, **characterised in that** the top end of the column (7) is integral with the first horizontal arm (5) supporting the control unit (6).
